# EUROPEAN PATENT SPECIFICATION

(11) **EP 2 998 781 B1**
(45) Date of publication and mention of the grant of the patent: **11.12.2019**
(21) Application number: 15186448.5
(22) Date of filing: 04.09.2006
(51) Int. Cl.: G02B 27/01, G06F 21/32, G06F 3/01

(54) **COMMUNICATION DEVICE, SYSTEM AND METHOD**
KOMMUNIKATIONSVORRICHTUNG, SYSTEM UND VERFAHREN
DISPOSITIF, SYSTÈME ET PROCÉDÉ DE COMMUNICATION

(30) Priority: 08.09.2005 US 222134
(43) Date of publication of application: 23.03.2016
(62) Divisional of application: 06793174.1
(73) Proprietor: Swisscom AG, 3050 Bern (CH)
(72) Inventor: Ritter, Rudolf, 3052 Zollikofen (CH); Lauper, Eric, 3014 Bern (CH)
(74) Representative: BOVARD AG

(56) References cited:
- WO-A-01/88680
- WO-A1-95/21395
- US-A- 5 276 471
- US-A1- 2002 039 063
- US-A1- 2002 044 152
- US-A1- 2002 059 425
- "Virtual Retinal Display (VRD) Technology", , 30 September 2000 (2000-09-30), XP002409926, Retrieved from the Internet: URL:http://www.cs.nps.navy.mil/people/facu lty/capps/4473/projects/fiambolis/vrd/vrd_ full.html [retrieved on 2006-11-30]
- "ATRUA ANNOUNCES WORLD'S MOST ADVANCED INTELLIGENT TOUCH CONTROLS?", ATRUA PRESS RELEASE , 15 March 2005 (2005-03-15), XP002409927, Retrieved from the Internet: URL:http://www.atrua.com/news/news_15march 05.html [retrieved on 2006-11-30]

## Description

### Field of the Invention

The present invention concerns a communication device and system comprising a Virtual Retinal Display (VRD) according to the independent claim and to a method for operating a communication device comprising a Virtual Retinal Display (VRD) in the form of glasses (spectacles) to project an image directly onto the retina of the user and at least one haptic sensor on the frame of said glasses, wherein it is possible to navigate by means of a cursor through the image displayed by the Virtual Retinal Display (VRD) with the at least one haptic sensor.

### Description of Related Art

Virtual Retinal Displays (VRD) have been described for example in patent applications WO-A1-94/09472, WO-A1-97/37339 and WO-A-98/13720 and therefore no longer need to be described. VRD devices project an image directly onto the retina of the user who is wearing the device.

WO-A2-2004/013676 relates to a mobile multimedia communication device, which is provided with a housing, input means, an electronic circuit, memory means, a power source comprising at least one VRD system for processing an image or data source and projecting the same in the form of laser beams onto the retina of the user of the device. In addition, said device has a station for audio, video and data communication that receives and transmits signals via radio network or other transmission channels. Said signals can be exchanged by means of a Bluetooth, wireless LAN, GSM, GPRS, EDGE, UMTS, DAB, 4G or 5G system or via any telephone cable, radio or satellite network.

Similar systems that allow an apparatus to be controlled by the eye are already known. WO-A1-01/88680 relates to a method enabling to input instruction into a VRD device wherein instructions can be inputted using sequences of voluntary movements of parts of the eye. The sequences required for a specific instruction depend individually on each user. However, eye movements are sometimes difficult to control; the eye also makes involuntary movements, among others saccades that under the circumstances could be interpreted as an instruction for the controlled device. These methods are therefore hardly suitable for entering security-critical instructions.

Furthermore, systems are known in which eye parameters are used as biometric keys to allow access to systems or services. It has among others been suggested to use the iris or retina pattern to authenticate the viewer or even to identify him.

WO-A1-02/41069 relates to a method for graphically visualizing objects, with which the objects represented on a visual field are comfortably and reliably manipulated, controlled or influenced with regard to their features and/or actions by interactive control commands of the user. Technologies used for inputting the control commands issued by the user, in addition to standard manually operable mechanical or touch-sensitive input mechanisms, involve the use of devices for recording, recognizing, interpreting and processing acoustic and/or optical signals of the user.

"Virtual Retinal Display (VRD) Technology", online, XP002409926, published on 30.September 2000 gives a brief overview over medical and military applications of VRD devices.

"Atrua announces World's most advanced intelligent touch controls", Atrua Press Release, published on March 15, 2005 gives a brief and general information on Intelligent Touch Controls as a new standard e.g. for mobile phone user inputs.

US2002/0044152 discloses a body-mounted wearable computer with a haptic control and head-mounted eyeglass display.

WO95/21395 discloses an eyeglasses display with switches mounted on the glasses to control audio and video.

US5276471 discloses an eyeglasses display with buttons and knobs mounted on the glasses to control audio and video.

US2002/0059425 discloses to store user-preferences of multiple users, wherein each user can access his preferences upon proper authentication. It is further disclosed to implement security using biometrics.

US2002/0039063 discloses a system of terminals with identification data wirelessly connected to an authorization-checking device integrated in glasses. The authorization-checking device comprises a Virtual Retina Display and tactile control.

### Brief summary of the invention

It is an aim of the invention to propose a new and improved communication device, system and method with which data displayed on a Virtual Retinal Display (VRD) can be easily controlled by the user.

It is another aim of the invention to propose a new and improved communication device, system and method with which it is possible for the user to navigate (such as scrolling, entering, rotating, pressing, etc.) easily through a graphical user interface (GUI), data or an image from a server displayed on the VRD device.

It is another aim of the invention to propose a new and improved communication device, system and method with which it is possible to identify or to authenticate users wearing glasses with a VRD device, where there is no space for a keypad and eye-based authentication may not be reliable or not available.

According to the present invention, these aims are achieved in particular through the characteristics of the independent claims. Further advantageous embodiments are moreover described in the dependent claims and in the description.

Especially, these aims are achieved by a communication device comprising:
- a Virtual Retinal Display (VRD) in the form of glasses (spectacles) to project an image onto the retina of the user;
- at least one haptic sensor, making it possible to navigate through a menu displayed by the Virtual Retinal Display (VRD) with the at least one haptic sensor, and
- a central control unit to control at least the Virtual Retinal Display (VRD) and the at least one haptic sensor.

These aims are also achieved by a communication system comprising:
- a Virtual Retinal Display (VRD) in the form of glasses (spectacles) to project an image onto the retina of the user;
- at least one haptic sensor, making it possible to navigate through a menu displayed by the Virtual Retinal Display (VRD) with the at least one haptic sensor, and
- a central control unit to control at least the Virtual Retinal Display (VRD) and the at least one haptic sensor,
- a short range communication interface and
- at least one external device to be connected to the Virtual Retinal Display (VRD) over the short range communication interface.

In an embodiment, these aims are achieved by the independent method claim which is directed to a method for operating a communication device comprising the steps:
- displaying an image with a Virtual Retinal Display (VRD), whereby the image is projected onto the retina of the user and
- navigating through a menu by at least one haptic sensor mounted on the frame of said glasses.

The haptic sensor can be mounted on the frame of said glasses or connected by a short range connection interface to said Virtual Retinal Display (VRD). The haptic sensor can be a fingerprint sensor and used for identification and authentication purposes as well. The retinal or iris scan data or voice recognition from the VRD can be used separately from or in addition to the mentioned authentication. The biometric authentication will be with advantage used to access a server, applications or an external device which is connected to the glasses by means of a short range communication interface. As external device a mobile headset, mp3-player, game console, PC, Laptop, DVB-H or DVB receiver, a mobile telephone comprising an identification module and connected to a mobile communication network, the Virtual Retinal Display (VRD) of another user or any other suitable device might be used.

When the communication device comprises an identification module of a radio mobile network, this module can be used to access remote servers or the internet. In this case the VRD may provide the biometric data.

The communication device further comprises a power supply, earphones and/or a (body scarf) microphone. The transparency of the glasses can preferably be controlled from see-through to non see-through parts of the glasses, and this progressively. In this way, the user can view the environment and the surroundings as well as a displayed graphical user interface (GUI). The transparency may also act as sun glasses. For users with visual defects, the glasses might also integrate visual correction.

Further advantageous embodiments can be found in the dependent claims.

In one embodiment, the device comprises means for storing biometric reference data and means for comparing the stored data with measured biometric data. The biometric data comprises for example one or a combination of fingerprint or voice recognition, iris and/or retinal scan.

In one embodiment, the device comprises a security module.

In one embodiment, the communication device comprises a contactless short range communication interface or a contact-based interface.

In one embodiment, the communication device further comprises an identification module of a radio mobile network.

In one embodiment, the communication device further comprises an eye-tracker in order to determine the position of the eyes.

In one embodiment, the communication device further comprises a power supply, earphones and/or a body scarf microphone.

In one embodiment, the communication device further comprises means for adjusting the transparency of the glasses.

In one embodiment, the communication device further comprises solar panels integrated into the glasses for use as a power supply of the communication device.

In one embodiment, the external device is a mobile headset, mp3-player, game console, PC, Laptop, DVB-H or DVB receiver, a mobile telephone comprising an identification module and connected to a mobile communication network, the Virtual Retinal Display of another user or any other suitable device.

In one embodiment, the communication system further comprising the use of said at least one haptic sensor as a fingerprint sensor to identify or authenticate the user of the communication device for the use of the Virtual Retinal Display or the external device.

In one embodiment, said Virtual Retinal Display is connected over said short range communication interface, over said mobile telephone and over said mobile communication network with a server.

In one embodiment, the method comprising further the step of choosing an item with the eyes of the user by viewing the item or by a predetermined sequences of the movement of the eye(s) and selecting the item with the at least one haptic sensor.

In one embodiment, the step of navigating comprises moving, rolling, scrolling, clicking, double clicking, pressing or zooming the image or video.

In one embodiment, the step of navigating comprises inputting characters on a virtual keyboard.

In one embodiment, the method comprising further the step of taking biometric features of the user, when the VRD device is used for the first time and storing the taking biometric features in a memory of said device.

In one embodiment, the method comprising further the step of authenticating the user by comparing the stored biometric features with biometric features of the user each time at the beginning of the use of the device.

In one embodiment, the method comprising further the step of authenticating the user by a number of different biometric features of the user.

In one embodiment, the method comprising further the step of connecting the Virtual Retinal Display over a short range communication interface (13) with an external device and exchanging data with the Virtual Retinal Display.

In one embodiment, the method comprising further the step of identifying or authenticating the user by one or a combination of biometric features of the user such as fingerprint, iris, retinal scan and/or voice recognition against the external device before the use of the device and the exchange of data.

In one embodiment, the method comprising further the step of entering a PIN code to identify or authenticating the user.

In one embodiment, the method comprising further the step of connecting the Virtual Retinal Display over a short range communication interface with a mobile headset, mp3-player, game console, PC, Laptop, DVB-H or DVB receiver, a mobile telephone comprising an identification module and connected to a mobile communication network, the Virtual Retinal Display of another user or any other suitable device.

In one embodiment, the method comprising further the step of identifying or authenticating the user by one or a combination of biometric features of the user such as fingerprint, iris, retinal scan and/or voice recognition.

### Brief Description of the Drawings

The invention will be better understood with the aid of the description of an embodiment given by way of example and illustrated by the figures, in which:
Fig. 1 shows a view of an inventive device and system comprising a Virtual Retinal Display in form of glasses with fingerprint sensors;
Fig. 2 illustrates a control system for a Virtual Retinal Display as seen in Fig. 1; and
Fig. 3 shows a different aspect of the invention, wherein means for adjusting the transparency are incorporated into the VRD device.

### Detailed Description of Possible Embodiments of the Invention

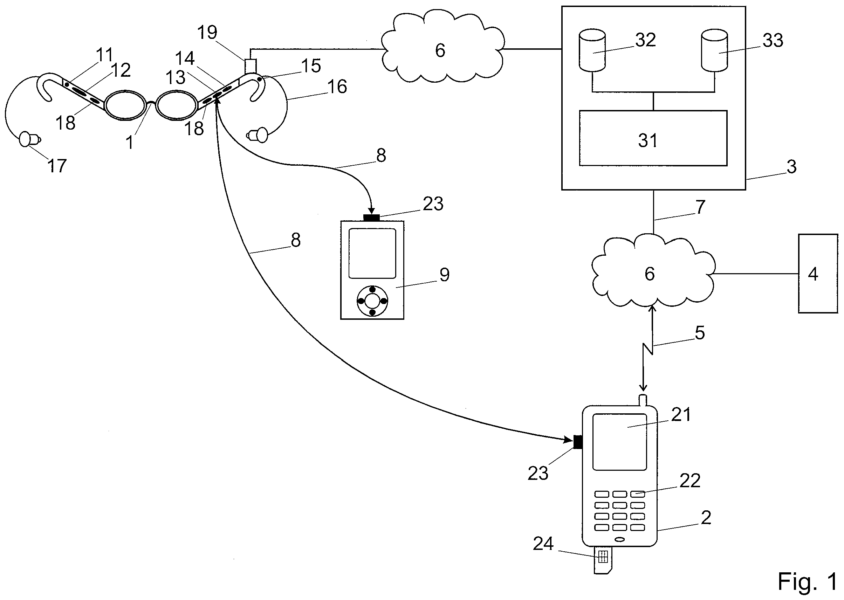

Fig. 1 illustrates an inventive communication system according to the present invention. In this example, a Virtual Retinal Display (VRD) is mounted in glasses 1. As already known, the VRD device 1 will project the image and pictures directly onto the retina of the user, who is wearing the glasses 1. Such VRD devices 1 are offered inter alia by the company Microvision and they have the advantage that they can be miniaturised and that they have only a small current consumption. VRD devices which are not mounted in glasses, but for example in a helmet, a hand device such as a mobile phone, a PDA or a laptop, or as part of a vehicle, a premises or a part of a fixed infrastructure such as a ATM cash dispenser, may be considered.

The image projected by the VRD on the retina may be produced by spatial modulation of a light beam using any suitable light shutter, for example based on liquid crystal technology. In another preferred embodiment, the projecting direction of a single light beam is moved using vibrating mirrors, for example two mirrors for moving it along two axes, so as to scan an image on the retina. In both embodiments, the light shutter respectively the mirrors may be based on MEMS technology.

The VRD device 1 is controlled by a video controller/control unit 11 in order to project image signals corresponding to a two-dimensional or three-dimensional image onto the fovea of the user's eye(s) with an integrated Retinal Scanning device 18. The Retinal Scanning device 18 can either display in monochrome mode or in full color still pictures or animated images, e.g. movies. The resolution of the Retinal Scanning device 18 can be up to HDTV or even higher. A double unit can beam two signals, one into each eye, for three-dimensional pictures. In order to be able to project the image directly onto the retina of the user, an eye-tracking system may optionally monitor the exact viewing direction of the eye. The eye-tracking system is used to identify the spot of a users view to a projected picture with one or more objects. This feature offers additional functions, e.g. identify which objects are preferred by a specific user.

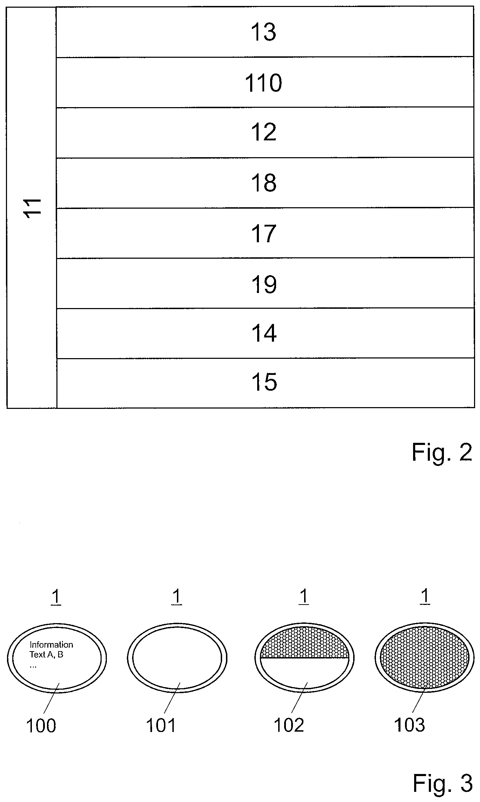

The overall control of all components of the device within the control unit 11 will be explained with respect to Fig. 2 below. As already known, the VRD device 1 can not only serve to project an image directly onto the retina of the user, but take biometric data from the user's eye (retinal scan, pupil) in order to identify or to authenticate the user as explained in detail below. For the same purpose, the VRD device 1 has to be equipped in addition with a light sensor. The same feature can be integrated in the mentioned Retinal Scanning device 18, which then serves not only as means for projecting, but also as means for scanning the user's biometric feature.

According to the present invention the VRD device 1 is equipped with haptic sensors 12, preferably on one or both sides of the frame of said glasses 1, in a way that it can easily be reached by the user with his fingers. A preferred example of haptic sensors 12 is an array of capacitive sensors, for example in a matrix of 9X192 capacitive electrodes, as made by the company ATRUA. Haptic sensor in the context of this document designates any sensor allowing navigation in at least two, preferably at least four, or any, directions through a graphical and/or text menu. Preferably, an haptic sensor in the sense of this application is a sensor that allows to enter not only binary selections, but also directions and amplitudes, depending on the moving direction of the finger. Some preferred capacitive haptic sensors also allow fingerprints to be taken, as described below. Other examples for haptic sensors which may be used are touch pads, joy sticks, trackballs or any finger operated input device for moving a cursor on a GUI or for navigating in a menu.

User authentication based on fingerprint captured with a haptic sensor may require the user to swipe his finger on the sensor, in order to capture an image of the whole finger.

With the haptic sensor 12 on the frame of said glasses 1, it is thus possible for the user to make selections, to navigate with a cursor through a graphical user interface (GUI), input characters on a virtual keyboard or change images or video sequences (zooming, replay, fast forward, etc.) displayed by the VRD device 1. A virtual keypad displayed by a VRD device is already known from the international publication WO-A1-01/88680. The term "navigate" comprises all known mouse features for moving a cursor such as displaying a cursor, rolling, scrolling, rotating, clicking, double clicking, and pressing in order to move through the graphical user interface (GUI). The system works therefore as the input system of a mouse or a joystick at a personal computer.

Furthermore, navigating through a menu which consists of icons or text could be done as well with the haptic sensor. The navigation then consists essential of flipping, possibly through the different icons or menu items, which then could be selected by clicking. The user then enters e.g. a new menu or selects an application. Still it would be possible to navigate by defining vectors, such as the direction and the length of the vector, for navigating along several directions in the menu and/or faster scrolling. The sense and length can also be used as parameters for commands, for example in order to control the loudspeaker volume, or the brightness or contrast of the display.

Since the VRD device 1 may also be equipped with an eye tracking system in order to determine the direction of the user's viewing or of a predetermined sequence of movements of the user's eye(s). This direction or sequence of directions can then be taken into account for entering further commands into the system. In this way, in one embodiment of the invention, the user will choose an item to be selected only by viewing the same item. Thereafter, the user can select the item by pressing or acting on the haptic sensor 12.

Many instructions or inputs can be combined taking into account the movement of the eye(s) and of the haptic sensor 12. Due to the arrangement of the haptic sensor 12 on the frame of the glasses 1 and the possibilities of moving through a graphical user interface (GUI) to input characters on a keypad or access a server, no space is needed for a separate keypad.

In another embodiment, the haptic sensor is not mounted directly on the glasses, but connected to the VRD device or to the same processing unit than the VRD device, for example over a wired or wireless interface. For example, if the device is used for driving a car or a plane, the VRD device may be mounted in glasses or in a helmet worn by the driver, or mounted in the cockpit, while the haptic sensor may be conveniently mounted near the steering wheel. Mutual authentication mechanisms are preferably provided to ensure that the VRD device is always communicating with the expected haptic sensor.

The haptic sensor 12 can be used for identification and authentication purposes as well if the sensor 12 is a fingerprint sensor. A mode switch may be used for a quick swipe between navigation and authentication of the user, so that the user knows when his fingerprint is taken. The different modes can be displayed in a (small) icon in the projected VRD image, so that the user is aware of mode. Alternatively, fingerprints may be taken each time the user manipulates the haptic sensor.

In a first embodiment, only authorized users can use the inventive device. In this way, before the use of the VRD device 1, the fingerprint or any other biometric feature such as voice recognition or a retinal or iris scan of the user can be taken in order to authenticate the user. This could even be done automatically by the device 1 without active intervention of the user, when the user wears the device and biometric data can be obtained by the device 1. Reference data will be taken when the user uses the device for the first time, and stored in a memory. Means for comparing the reference data with the measure data are provided in the device. In one embodiment, this memory is a smart card such as an identification module (SIM) 19 of a radio mobile network 6, where the biometric reference data can be stored. In a variant embodiment the fingerprint reference is stored in a special chip, which has the same or similar functionality of a SIM, such as a specific security chip as described in patent application WO-A2-02/01328. The SIM, or any other security chip, may also be used alone or in addition to the biometric parameters for user identification or authentication.

If the authentication procedure is positive, the user can use the device or execute an application in the device. Of course, it would be possible to store the biometric data of different users that are allowed to use the device. The registration and authentication procedure will be the same for all the users. However, it is possible in the beginning to launch different programs or apply different user preferences for different users. These user set-ups will preferably also be stored in said memory.

If the VRD device 1 is equipped with the mentioned identification module (SIM) 19 and it is connected to a mobile communication network 6 such as GSM or UMTS, the device can be used as a mobile phone and the user can enter his commands, write SMS or MMS, select telephone numbers to be dialled, etc. using the haptic sensor 12 or both the haptic sensor 12 and eye commands. A video phone call or a video conference can be conducted where the user sees his or her telephone or conference partner(s). In the same way, the user can access the internet over the mobile communication network 6 and navigate through it. To enable full communications capabilities, one or several microphones can be integrated in the glasses frame, e.g. body scarf microphones 15 with contact to the temporal bone or any other conventional microphone. Other embodiments are also possible, such as a combination with an ear phone 17. The glasses' frame is connected over an electric wire 16 with said ear phone or earplugs 17. The ear plugs might also combined with an acoustic hearing aid.

The power supply 14 of the VRD device 1 can consist of photovoltaic cells, the accumulator and the controlling part in the control logic 11. The photovoltaic cells may be mounted in the frame or as an additional transparent layer as a coating on the glasses 1, using for example Graetzel cells such as known from US-A-5,441,827 or conventional silicon cells. In addition to these elements, contacts might be foreseen to reload the energy system. Other energy sources are also possible. In addition, the ear phones 17 might integrate accumulators for the power supply.

The inventive glasses 1 can also be equipped with a short range contactless interface 13. Over the contactless interface 13, the glasses 1 are connected over a contactless communication channel 8 to an external device, such as a mobile phone 2 or any other personal device 9 which is also equipped with such a contactless interface 23. Contactless interfaces 13, 23 are known in the prior art as well, such as for example according to Bluetooth, ZigBee, IrDA, HomeRF, NFC (near field communication), WLAN or DECT.

In a first embodiment of the present invention, data from the personal device 9 is transmitted over the contactless communication channel 8. Before this procedure, the user can be authenticated from the VRD device 1 itself with one or a combination of biometric features and/or passwords as explained above. Of course, this procedure is only optional. The user starts the glasses 1 by clicking on a start button, or with a fast swipe on the haptic sensor 12 in order to get a secure connection between the personal device 9 and the VRD device 1. The fast swipe (gesture) is a fast finger move over the fingerprint sensor 12, which starts the function of the entire system and displays a service menu (graphical user interface GUI) by using the retinal scanning device 18.

To continue, the user may start an authentication procedure by swiping his specific finger over the fingerprint sensor before he sees said menu. Navigating and taking the fingerprint of the user can also be performed at the same time, when the user is using the haptic sensors 12. In this way he can move through a server and access secured parts only when he is authenticated by his fingerprints taken during the prior navigation. This second authentication procedure will be performed with the reference data stored in the personal device 9. The fingerprint sensor 12 is either a solid state fingerprint sensor or a solid sweep fingerprint sensor (capacitive sensor) with a communication interface to the Identification module (SIM-Card) 19 (or as seen later SIM-Card 24) or to any specific security chip as described above.

WO-A2-02/01328 offers a biometric-based security chip in which the user database, processor, and biometric map generation functions are all located on the same integrated circuit, whose secure contents are inaccessible from outside the integrated circuit. Biometric data, such as a fingerprint, iris, retina scan, and/or voiceprint, is taken from a user requesting access to restricted resources. The biometric data is transferred into the integrated circuit, where it is converted into a biometric map and compared with a database of biometric maps stored in a non-volatile memory in the integrated circuit. The stored maps represent pre-authorized users, and a match triggers the security circuit to send a signal to a host processor authorizing the host processor to permit the requesting user access to the restricted resources. The integrated circuit essentially serves as a write-only memory for the secure data, because the secure data and security functions in the integrated circuit are not directly accessible through any pin or port, and therefore cannot be read or monitored through a dedicated security attack. A second non-volatile memory, accessible from outside the integrated circuit, can also be provided in the integrated circuit for storing non-secure data. This second memory has its own interface port, and is isolated from the security-related functions and memory so that secure and non-secure functions are physically isolated from each other and cannot be modified to overcome that isolation.

If the authentication test is positive, the user can use the personal device 9 and the data will be displayed with the retinal scanning device 18. In order to create a secure system, this authentication can be a combined authentication with eye (retina, pupil or iris), finger (fingerprint, blood vessel) and/or voice recognition and/or comparison of data stored in the mentioned chip-card in the VRD device 1 or in the above mentioned security chip.

Different combinations of biometric data and/or passwords or PINs may be requested by different applications, by different parts of a same application, or depending on the context or current security level. For example, a retinal authentication may be sufficient for many applications, but additional authentication data, for example a fingerprint, a voiceprint, or a password may be requested by security-sensitive applications, or when the confidence level delivered by the retinal authentication system is below a predetermined threshold. Alternatively, the various authentication methods available may be chosen by the user, or used sequentially as fall-back if a first authentication fails.

As will be understood, the PIN or password can be entered with the haptic sensor 12 by the user, for example by means of a virtual keyboard which is displayed to him by the VRD device 1.

When the authentication procedure is positive, the user is able to navigate through the personal device 9 (or the mobile phone 2) by entering commands through the mentioned haptic sensors 12 mounted on the inventive glasses 1. The commands will also be transmitted over the communication channel 8. As already mentioned, the navigation includes known commands such as rolling, scrolling, clicking and/or pressing, etc. With this equipment, the user will be able to elect video clips to be displayed, to play games or to review personal documents that are stored in the personal device 9. Sound presented at the same time will be presented to the user through said earphones 17 and will be transmitted e.g. over the same communication channel 8. Examples of possible personal devices 9 are mobile handsets, mp3 players, game consoles, PC, Laptops, DVB-H or DVB receivers or any other suitable device.

If the system is paired with an external device 9 (or as seen below with the mobile phone 2), the system will start the communication with this device 9. In one embodiment, the system control (control unit 11) may contain a specific register of paired external devices 2, 9. If so, the user may select one of the registered devices 2, 9 for his usage. Once the user has selected the device 2, 9 he wants, he can use the fingerprint sensor to have full control of said external device 2, 9 by using the fingerprint sensor 12.

If the VRD device 1 is connected to a broadcast receiver in the described way, there is the possibility to use it for authentication within a DRM (Digital Right Management) system. The user then may subscribe a certain content in advance for which he pays a fee (pay-TV). During the subscription, e.g. in a video store, the user has to indicate his biometric data to the content provider. And the user only can decrypt the subscribed content, if the biometric data matches the user specific encryption data sent along with the content. Of course, encryption and decryption means will be used in order to provide appropriate security.

In this embodiment, the haptic sensor 12 can be used not only for selecting items such as channels, volume, brightness, etc. but also for zooming, replaying, etc. the displayed image or video.

If the user connects the VRD device 1 to a personal computer as personal device 9 and he wants to access a special application run by this device 9, this application can preferably be secured with biometric features. In this way, the application is protected and can only be used by authorized persons.

In a second embodiment, the inventive VRD device 1 is connected over the contactless communication channel 8 to the mobile phone 2. The mobile phone 2 comprises a display 22, a keyboard 23 (or any other input means), said contactless interface 23 and a chip-card, for example a SIM (Subscriber Identification Module) card 24, in which user-specific data are stored. Again, any type of data can be exchanged in both directions from the VRD device 1 to said mobile phone 2 over the short range communication interfaces 13, 23 and displayed by the VRD device 1 or the mobile phone 2. In a variant embodiment there could be a contact based interface (such as a wire) and the VRD is connected over that interface to the external device 9 or the mobile phone 2.

The authentication procedure is similar to the one explained above for the personal device 9. Reference biometric data can be stored in the SIM card 24. This biometric data will be compared with the measured biometric data taken from the user and transmitted from the VRD device 1 to the mobile phone 2 or from the mobile phone 2 to the VRD device 1. If the authentication is positive, the user can visualize his data from the mobile phone, such as reading and writing SMS or MMS or browsing the (mobile) internet using the haptic sensor 12. Again, it is possible to use the plurality of biometric data and/or an additional PIN code as above mentioned. In another embodiment, during the use of the inventive system, the user may also have access to non associated audio signals, e.g. to his telephone calls, while watching any other optical signal at the same time.

The mobile phone 2 is connected to a communication network 6 over a mobile radio interface 5. The network 6 is for example a mobile radio network, for example according to GSM or UMTS, but could also be the internet or consist of several networks. The mobile phone 2 can be connected over the communication network 6 with a remote server 3, for example with a http or WAP server, that is administered by the operator of the communication network 6 and/or by a service provider. The data transmission between the mobile phone 2 and the remote server 3 is preferably secured end-to-end, for example with the protocol SSL (Secure Sockets Layer), TLS (Transport Layer Security) and/or WTLS (Wireless Transport Layer Security). Data sent from the mobile phone 2 to the server 3 are preferably signed electronically by a security module, preferably with an electronic private key stored in an electronic certificate in the SIM card 24 or in the security module 110 in the glasses 1 or in the mobile phone 2 (securing the air interface / contactless communication channel 8).

According to this embodiment, said Virtual Retinal Display 1 is connected over said short range communication interfaces 13, 23, over said mobile telephone 2 and over said mobile communication network 6 with the server 3 or the content provider 4. The server 3 contains a portal 31 for accessing over a communication path 7 different databases therein such as a customer database 32 or a services database 33. The identification or authentication of the user against the server 3 is performed in the same way as described above with the fingerprint sensor 12 mounted on the frame of the glasses 1 with retinal authentication with voice authentication and/or password. This embodiment allows a fingerprint to be taken from the user while the user is using the haptic sensor as a navigation instrument to access the server 3 or the content provider 4 or to tone other biometric data while he is speaking or looking into the VRD device. For the access of the server 3, the security control can be done by with the haptic sensor 12 with reference data stored in the SIM card. If the test is positive, the server 3 can be accessed. In this way the security is significant increased. In a variant embodiment the fingerprint reference is stored in a special chip, which has the same or similar functionality of a SIM, or as a specific security chip as described above. In still a further embodiment, a user identification in the SIM, or in any security chip, is used in addition or for replacing fingerprint or other biometric identifications when accessing the server.

The user has to register in advance with his biometric features in order to be identified or authenticated if he wants to access this server 3. The rights given to the user on the server 3 depend on the type of server 3 and the type of services offered by the service provider. The mobile phone 2 can also be connected over the communication network 6 to a content provider 4 in order to make a subscription for a certain content, thereby transmitting his or her biometric feature(s) to the content provider 4.

For the access to the content provider 4, the security control can be done by with the haptic sensor 12 with reference data stored in the SIM card. If the test is positive, the content can be accessed. In this way the security is significant increased. In a variant embodiment the fingerprint reference is stored in a special chip, which has the same or similar functionality of a SIM, such as a specific security chip as described above. In still a further embodiment, a user identification in the SIM, or in any security chip, is used in addition or for replacing fingerprint or other biometric identifications when accessing the content.

In a further embodiment, two "sensor glasses 1" can be connected together via the contactless interface 13 or the communications network 6 or the between a user A and a user B, both using the same device 1. In this embodiment, the user A will experience the sounds and images captured by the sensor glasses 1 of the user B (microphone and inverted retinal scanning device 18). Additional information will be provided by marking the user B's viewpoint on the user A's beamed image. This embodiment is particularly useful for video conferences and video games.

The system control is a microprocessor to control all functions of the inventive glasses as presented in Fig. 2. The control unit 11 is responsible for controlling all parts of the VRD device 1 such as the fingerprint (haptic) sensor 12, contactless interface 13, power supply 14, microphone 15, earphone 17, Retinal Scanning Display 18 and a memory and/or an identification module (SIM-Card) 19. The control unit 11 is also responsible for securing the contactless communication channel 8 by means of encryption. In the memory, the software for controlling the hardware components, the biometric features and the user preferences is stored. It could include applications or programs to be executed directly by the users or the specific register of paired external devices 2, 9 for which the user has obtained the right to access this device 2, 9.

As seen in Fig. 3, the glasses 1 are multifunctional. Based on the application and/or the written text, the transparency of the glasses 1 can be controlled from see-through (100) to non see-through parts of the glasses 101, 102, 103, and this progressively. In this way, the user can be the environment and the surroundings as well as a displayed graphical user interface (GUI). The transparency may also act as sun glasses. For users with visual defects, the glasses might also integrate visual correction. The user selects one of said display modes 100, 101, 102, 103. Depending on the mode, he may also control the transparency of the glasses. The control movement is done by one of the said functions of the haptic sensor 12. In a variant embodiment, the transparency is adapted automatically according to the content which is displayed by the VRD device 1 or on the background of the view of the user. In this way, no white letters should be displayed if the user sees at least partially a clear blue sky or white clouds, or black letters if the background is black or grey.

The advantages of such inventive "sensor glasses" are significant in the domains of speed, convenience, quality, confidence and trust. There is no need for a separate keyboard, but only one haptic sensor 12 which makes the use for the user very easy.

### Reference numbers

1 Glasses, Virtual Retinal Display, VRD device
100 Glasses of VRD device 1 (variable transparency), display mode
101 Glasses of VRD device 1 (variable transparency), display mode
102 Glasses of VRD device 1 (variable transparency), display mode
103 Glasses of VRD device 1 (variable transparency), display mode
11 Control logic
110 Security module
12 Haptic sensor, Fingerprint sensor
13 Contactless interface
14 Power supply
15 Body scarf microphone
16 Electric wire
17 Earphone
18 Retinal Scanning Display (RSD)
19 Identification module (SIM-Card)
2 Mobile phone
21 Display
22 Keyboard
23 Contactless interface
24 Identification module (SIM-Card)
3 Server
31 Portal
32 Customer database
33 Services database
4 Content provider
5 Mobile radio interface
6 Mobile communication network
7 Communication path
8 Contactless communication channel
9 Personal device

## Claims

1. A communication device comprising
- a Virtual Retinal Display (VRD) in form of glasses (1) to project an image onto the retina of a user;
- at least one haptic sensor (12), wherein it is possible to navigate through a menu displayed by the Virtual Retinal Display with the at least one haptic sensor (12), and wherein the at least one haptic sensor (12) is mounted on the frame of said glasses (1) and the at least one haptic sensor (12) is a touch pad or an array of capacitive sensors; and
- a central control unit (11) to control at least the Virtual Retinal Display and the at least one haptic sensor (12).

2. The communication device according to the previous claim, wherein the at least one haptic sensor (12) allows to enter directions and amplitudes depending on the moving direction of the finger.

3. The communication device according to one of the previous claims, wherein the at least one haptic sensor (12) is arranged on one side of the frame of said glasses (1).

4. The communication device according to one of the previous claims, wherein the at least one haptic sensor (12) acts as a fingerprint sensor to identify or authenticate the user of the communication device.

5. The communication device according to the previous claim, comprising a memory in said glasses (1) in which fingerprint reference data of different users and user set-ups are stored, wherein the communication device is configured to launch after the user authentication in the beginning different programs or apply different user preferences according to said user set-ups which are stored in said memory.

6. The communication device according to claim 4 or 5 comprising a retinal scanning device (18) for taking the biometric data from the user's eye in order to identify or authenticate the user of the communication device.

7. The communication device according to any of the claims 1 to 6, wherein the communication device comprises a contactless short range communication interface (13).

8. The communication device according to any of the claims 1 to 7, wherein the communication device further comprises an identification module (24) of a radio mobile network (6), a power supply (14), earphones (17) and/or a body scarf microphone (15).

9. The communication device according to any of the claims 1 to 8, wherein the communication device further comprises an eye-tracker in order to determine the position of the eyes.

10. A communication system comprising
- a communication device according to one of the previous claims with a short range communication interface (13) and
- at least one external device (2,9) to be connected to the communication device over the short range communication interface (13).

11. The communication system according to claim 10, wherein the external device is a mobile headset, mp3-player, game console, PC, Laptop, DVB-H or DVB receiver, a mobile telephone (2) comprising an identification module (24) and connected to a mobile communication network (5), the Virtual Retinal Display of another user or any other suitable device.

12. A method for operating a communication device, the method comprising the steps of
- displaying an image or video with a Virtual Retinal Display (VRD) of glasses (1), whereby the image is projected onto the retina of the user and
- navigating through a menu by at least one haptic sensor (12) mounted on the frame of said glasses (1), wherein the at least one haptic sensor (12) is a touch pad or an array of capacitive sensors.

13. A method for operating a communication device according to claim 12, the method comprising further the step of choosing an item with the eyes of the user by viewing the item or by a predetermined sequences of the movement of the eye(s) and selecting the item with the at least one haptic sensor (12).

14. A method for operating a communication device according to claim 12 or 13, wherein the step of navigating comprises moving, rolling, scrolling, clicking, double clicking, pressing or zooming the image or video.

15. A method for operating a communication device according to any of the claims 12 to 14, wherein the step of navigating comprises inputting characters on a virtual keyboard.

## Patentansprüche

1. Eine Kommunikationsvorrichtung, umfassend
- eine virtuelle retinalen Anzeigeeinrichtung (VRD) in Form von Gläsern (1), um ein Bild auf der Retina eines Benutzers zu projizieren;
- mindestens einen haptischen Sensor (12), wobei es möglich ist, mit dem mindestens einen haptischen Sensor (12) durch ein Menü zu navigieren, welches auf der virtuellen retinalen Anzeigeeinrichtung angezeigt wird, und wobei der mindestens eine haptische Sensor (12) an dem Rahmen der Gläser (1) befestigt ist und wobei der mindestens eine haptische Sensor (12) ein Touchpad oder ein Array von Kapazitätssensoren ist; und
- eine zentrale Steuereinheit (11), um mindestens die virtuelle retinale Anzeigeeinrichtung und den mindestens einen haptischen Sensor (12) zu steuern.

2. Kommunikationsvorrichtung nach dem vorhergehenden Anspruch, wobei der mindestens eine haptische Sensor (12) es erlaubt, Richtungen und Amplituden abhängig von der Bewegungsrichtung des Fingers einzugeben.

3. Kommunikationsvorrichtung nach einem der vorhergehenden Ansprüche, wobei der mindestens eine haptische Sensor (12) an einer Seite des Rahmens der Gläser (1) angeordnet ist.

4. Kommunikationsvorrichtung nach einem der vorhergehenden Ansprüche, wobei der mindestens eine haptische Sensor (12) als ein Fingerabdruck-Sensor agiert, um den Benutzer der Kommunikationsvorrichtung zu identifizieren oder zu autorisieren.

5. Kommunikationsvorrichtung nach dem vorhergehenden Anspruch, umfassend einen Speicher in den Gläsern (1), in dem die Fingerabdruck-Referenzdaten verschiedener Benutzer und Benutzer-Einstellungen gespeichert sind, wobei die Kommunikationsvorrichtung eingerichtet ist, um nach der anfänglichen Benutzerautorisierung unterschiedliche Programme zu starten oder unterschiedliche Benutzer-Präferenzen gemäss der Benutzer-Einstellungen anzuwenden, welche in dem Speicher gespeichert sind.

6. Kommunikationsvorrichtung nach Anspruch 4 oder 5, umfassend eine retinale Scaneinrichtung (18), um die biometrischen Daten von dem Benutzerauge zu nehmen, um den Benutzer der Kommunikationsvorrichtung zu identifizieren oder zu autorisieren.

7. Kommunikationsvorrichtung nach einem der Ansprüche 1 bis 6, wobei die Kommunikationsvorrichtung eine kontaktlose Kurzstrecken-Kommunikationsschnittstelle (13) umfasst.

8. Kommunikationsvorrichtung nach einem der Ansprüche 1 bis 7, wobei die Kommunikationsvorrichtung ferner ein Identifizierungsmodul (24) eines Mobilfunknetzes (6), eine Energieversorgung (14), Kopfhörer (17) und/oder ein Körperschal-Mikrophone (15) umfasst.

9. Kommunikationsvorrichtung nach einem der Ansprüche 1 bis 8, wobei die Kommunikationsvorrichtung ferner einen Augen-Tracker umfasst, um die Position der Augen zu erfassen.

10. Kommunikationssystem, umfassend
- eine Kommunikationsvorrichtung nach einem der vorhergehenden Ansprüche mit einer Kurzstrecken-Kommunikationsschnittstelle (13) und
- mindestens eine externe Einrichtung (2, 9), welche mit der Kommunikationsvorrichtung über die Kurzstrecken-Kommunikationsschnittstelle (13) verbindbar ist.

11. Kommunikationssystem nach Anspruch 10, wobei die externe Einrichtung ein Mobiltelefon-Headset, MP3-Spieler, Spielekonsole, PC, Laptop, DVB-H oder DVB Empfänger, ein Mobiltelefon (2), umfassend ein Identifizierungsmodul (24) und verbunden mit einem Mobilfunknetz (5), die virtuelle retinale Anzeigeeinrichtung eines anderen Benutzers oder jede andere geeignete tragbare Einrichtung ist.

12. Verfahren zur Verwendung einer Kommunikationsvorrichtung, wobei das Verfahren die Schritte umfasst
- Anzeigen eines Bildes oder Videos mit einer virtuellen retinalen Anzeigeeinrichtung (VRD) von Gläsern (1), wobei das Bild auf die Retina des Benutzers projiziert ist und
- Navigieren durch ein Menü mittels mindestens eines haptischen Sensors (12), welcher an dem Rahmen der Gläser (1) befestigt ist, wobei der mindestens eine haptische Sensor (12) ein Touchpad oder ein Array von Kapazitätssensoren ist.

13. Verfahren zur Verwendung einer Kommunikationsvorrichtung nach Anspruch 12, wobei das Verfahren ferner den Schritt zum Auswählen von Gegenständen mit den Augen des Benutzers umfasst durch Betrachtung des Gegenstands oder durch eine vorbestimmte Sequenz von Bewegungen des Auges oder der Augen und Auswählen des Gegenstands mit dem mindestens einen haptischen Sensor (12).

14. Verfahren zur Verwendung einer Kommunikationsvorrichtung nach Anspruch 12 oder 13, wobei der Schritt des Navigierens Bewegen, Rollen, Scrollen, Klicken, Doppelklicken, Drücken oder Zoomen des Bildes oder Videos umfasst.

15. Verfahren zur Verwendung einer Kommunikationsvorrichtung nach einem der Ansprüche 12 bis 14, wobei der Schritt des Navigierens Eingeben von Zeichen an einer virtuellen Tastatur umfasst.

## Revendications

1. Dispositif de communication comprenant
- un écran rétinien virtuel (VRD) en forme de verres (1) pour projeter une image sur la rétine d'un utilisateur ;
- au moins un capteur haptique (12), grâce auquel il est possible de naviguer à travers un menu affiché par un écran rétinien virtuel, et ledit au moins un capteur haptique (12) étant monté sur le cadre desdits verres (1) et au moins le capteur haptique (12) est un pavé tactile ou une matrice de capteurs capacitifs; et
- une unité de commande centrale (11) pour contrôler au moins l'écran rétinien virtuel et au moins le capteur haptique (12).

2. Dispositif de communication selon la revendication précédente, ledit au moins un capteur haptique (12) permettant d'entrer des directions et des amplitudes en fonction de la direction de déplacement du doigt.

3. Dispositif de communication selon l'une des revendications précédentes, ledit au moins un capteur haptique (12) étant agencé sur un côté du cadre desdits verres (1).

4. Dispositif de communication selon l'une des revendications précédentes, ledit au moins un capteur haptique (12) agissant comme un capteur d'empreinte digitale pour identifier ou authentifier l'utilisateur du dispositif de communication.

5. Dispositif de communication selon la revendication précédente, comprenant une mémoire dans lesdits verres (1) dans laquelle les données de référence de l'empreinte digitale des différents utilisateurs et des configurations des utilisateurs sont stockées, le dispositif de communication étant configuré pour lancer, après l'authentification de l'utilisateur au préalable, différents programmes ou appliquer les différentes préférences d'utilisateurs selon lesdites configurations des utilisateurs qui sont stockées dans ladite mémoire.

6. Dispositif de communication selon la revendication 4 ou 5 comprenant un dispositif de balayage rétinien (18) pour saisir les données biométriques de l'œil de l'utilisateur afin d'identifier ou authentifier l'utilisateur du dispositif de communication.

7. Dispositif de communication selon l'une des revendications 1 à 6, le dispositif de communication comprenant une interface de communication sans contact de courte portée (13).

8. Dispositif de communication selon l'une des revendications 1 à 7, le dispositif de communication comprenant en outre un module d'identification (24) d'un réseau mobile radio (6), une alimentation électrique (14), des écouteurs (17) et/ou un microphone en écharpe (15).

9. Dispositif de communication selon l'une des revendications 1 à 8, le dispositif de communication comprenant en outre un oculomètre afin de déterminer la position des yeux.

10. Système de communication comprenant
- un dispositif de communication selon l'une des revendications précédentes avec une interface de communication de courte portée (13) et
- au moins un dispositif externe (2, 9) à connecter au dispositif de communication sur l'interface de communication de courte portée (13).

11. Système de communication selon la revendication 10, dans lequel le dispositif externe est un casque mobile, un lecteur mp3, une console de jeu, un PC, un laptop, un récepteur DVB-H ou DVB, un téléphone mobile (2) comprenant un module d'identification (24) et étant connecté à un réseau de communication mobile (5), l'écran rétinien virtuel de l'autre utilisateur ou n'importe quel autre dispositif approprié.

12. Méthode pour faire fonctionner un dispositif de communication, la méthode comprenant les étapes suivantes:
- afficher une image ou d'une vidéo avec un écran rétinien virtuel (VRD) de verres (1), l'image étant projetée sur la rétine de l'utilisateur et
- naviguer à travers un menu à l'aide d'au moins un capteur haptique (12) monté sur le cadre desdits verres (1), ledit au moins le capteur haptique (12) étant un pavé tactile ou une matrice de capteurs capacitifs.

13. Méthode pour faire fonctionner un dispositif de communication selon la revendication 12, la méthode comprenant en outre l'étape de choisir un objet avec les yeux de l'utilisateur en voyant l'objet ou par des séquences prédéterminées du mouvement des yeux et la sélection de l'objet à l'aide dudit au moins le capteur haptique (12).

14. Méthode pour faire fonctionner un dispositif de communication selon la revendication 12 ou 13, l'étape de navigation comprenant le déplacement, l'enroulement, le défilement, le clic, le double-clic, la pression ou le zoom de l'image ou de la vidéo.

15. Méthode pour faire fonctionner un dispositif de communication selon l'une des revendications 12 à 14, l'étape de navigation comprenant la saisie de caractères sur un clavier virtuel.
